# EUROPÄISCHE PATENTSCHRIFT

(11) **EP 0 596 348 B1**
(45) Veröffentlichungstag und Bekanntmachung des Hinweises auf die Patenterteilung: **02.01.1997**
(21) Anmeldenummer: 93117190.4
(22) Anmeldetag: 22.10.1993
(51) Int. Cl.: C02F 1/40, E03F 5/16

(54) **Vorrichtung zum Abscheiden von Lecköl aus Schmier- und Kühlemulsionen**
Apparatus for separating leakage oil from lubricating and cooling emulsions
Dispositif pour séparer de l'huile de fuite à partir d'émulsions refroidissantes et lubrifiantes

(30) Priorität: 31.10.1992 DE 4236918
(43) Veröffentlichungstag der Anmeldung: 11.05.1994
(73) Patentinhaber: Ullmann, Adolf, D-73105 Dürnau (DE)
(72) Erfinder: Ullmann, Adolf, D-73105 Dürnau (DE)
(74) Vertreter: Seemann, Norbert W., Dipl.-Ing.

(56) Entgegenhaltungen:
- DE-A- 2 222 198
- DE-A- 4 113 593
- DE-U- 9 113 152
- GB-A- 1 210 967
- US-A- 4 341 637
- US-A- 5 080 781

## Beschreibung

Die Erfindung bezieht sich auf eine in der Praxis im allgemeinen als sog. Ölskimmer bezeichnete Vorrichtung in einer generellen baulichen Ausgestaltung nach dem Oberberiff des Patentanspruches 1.

Bekannt in diesem Zusammenhang ist beispielsweise durch die DE-A-41 13 593 (UHL) eine Vorrichtung zum Abscheiden von Lecköl aus Schmier- oder Kühlemulsionen, beispielsweise bei der spanabhebenden Metallbearbeitung, mittels eines in einem rahmenartigen Gestell über Rollen, von denen zumindest eine durch einen Motor angetrieben ist, umlaufenden, teilweise in die verunreinigten Emulsion eintauchenden Bandes sowie letzterem zugeordnete, mechanische Abstreifer für das Sammeln und Ableiten des am Austragband beidseitig anhaftenden Lecköls zu einem Auffangbehälter, sowie vorzugsweise beidseits der in die Oberfläche der verunreinigten Emulsion teilweise eintauchenden, unteren Bandumlenkrolle auf deren Welle angeordneter und mit dieser gleichlaufend mitdrehender Flügelräder zum Erzeugen einer zum Austragband hin gerichteten Oberflächenströmung in der verunreinigten Emulsion; eine demselben Zweck dienliche Vorrichtung mit annähernd gleichem Aufbau ist weiterhin noch in dem DE-U-91 13 152.9 ausführlich offenbart.

Der für die Praxis gravierende Nachteil bei diesen bekannten Ausführungen liegt aber vorrangig darin, daß trotz der dort bereits vorhandenen Flügelräder keine eindeutig zum Austragband hin gerichtete Strömung des auf der Emulsion aufschwimmenden Lecköls erzielt wird, sondern eher der gegenteilige Effekt eines unerwünschten Verrührens auftritt.

Da das richtungsorientierte Hinleiten des aufschwimmenden Lecköls zum Austragband aber unabdingbare Voraussetzung für eine optimale Wirkung und Leistung der hier zur Rede stehenden Vorrichtung ist, muß die wesentliche Aufgabe der vorliegenden Erfindung vor allen weiteren Detailverbesserungen primär darin gesehen werden, hierfür geeignete bauliche Maßnahmen an den Flügelrädern zu schaffen.

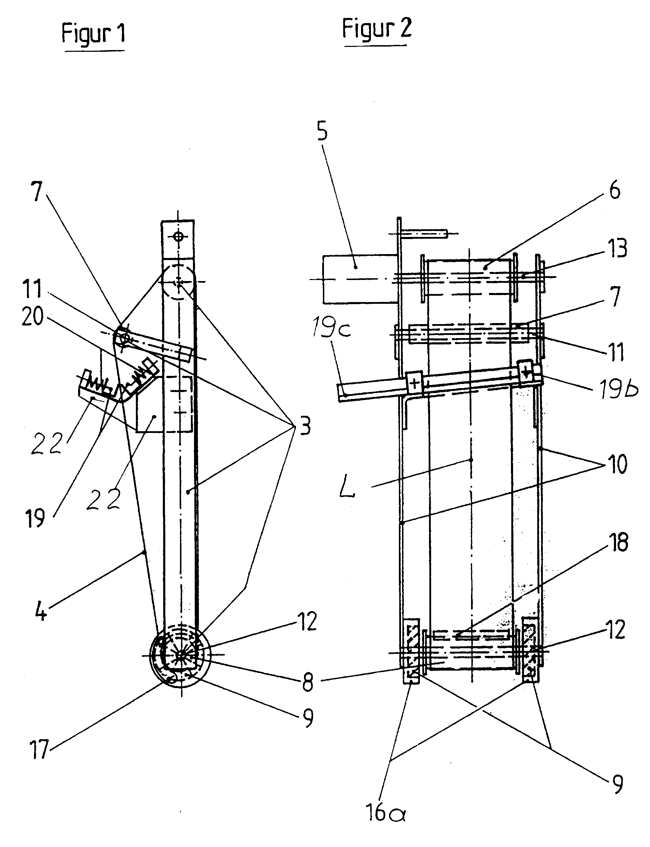

Gelöst wird diese Aufgabe dabei in überraschend einfacher und wirkungsvoller Weise durch die im Patentanspruch 1 angegebenen kennzeichnenden Merkmale. Die Unteransprüche beinhalten hierzu vorteilhafte Einzelheiten und sonstige funktionstechnisch erhebliche Weiterbildungen an der erfindungsgemäßen Vorrichtung, die zudem anhand eines Ausführungsbeispiels mit Alternative in den Zeichnungen dargestellt und anhand dieser im folgenden noch näher beschrieben ist.
Es zeigen in weitestgehend schematischer Darstellung
- Fig. 1: die neue Vorrichtung in Seitenansicht,
- Fig. 2: die Vorderansicht zu Fig.1,
- Fig. 3: eine Alternativausführung zu Fig. 1,
- Fig. 4: die Vorrichtung nach Fig. 1 in Betriebsstellung,

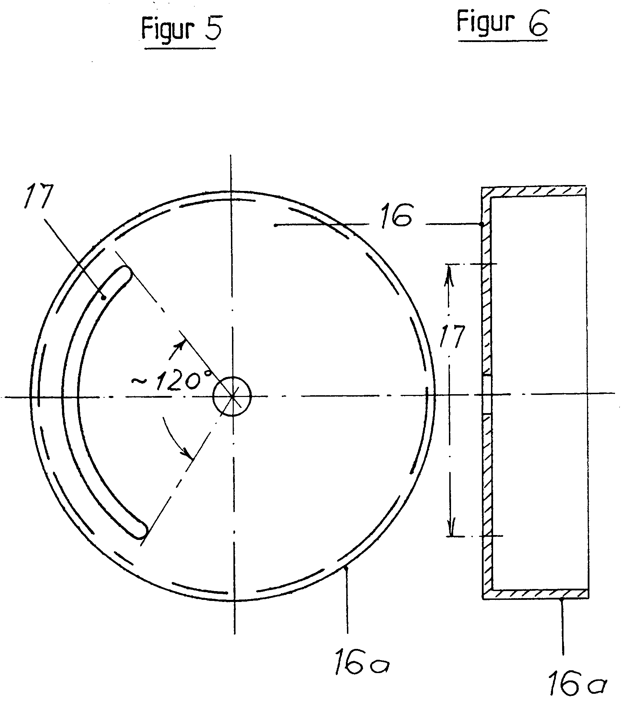

- Fig. 5: im Maßstab von etwa 1:1 eine Ansicht auf das neue Flügelradgehäuse und
- Fig. 6: eine Schnittdarstellung zu Fig. 5.

Aus den zeichnerischen Darstellungen zu entnehmen ist zunächst einmal in einem weitestgehend bekannten Grundaufbau eine Vorrichtung zum Abscheiden von Lecköl Ö aus Schmier- oder Kühlemulsionen E, beispielsweise bei der spanabhebenden Metallbearbeitung, mittels eines in einem rahmenartigen Gestell 3, 10 bzw. 14, 15 über Rollen 6, 7, 8, von denen zumindest eine 6 durch einen Motor 5 angetrieben ist umlaufenden, teilweise in die verunreinigte Emulsion E, Ö eintauchenden Bandes 4 sowie letzterem zugeordnete, mechanische Abstreifer 19, 19a für das Sammeln und Ableiten des am Austragband 4 beidseitig anhaftenden Lecköls Ö zu einem Auffangbehälter 21, sowie vorzugsweise beidseits der in die Oberfläche der verunreinigten Emulsion E, Ö teilweise eintauchenden, unteren Bandumlenkrolle 8 auf deren Welle 12 angeordneter und mit dieser gleichlaufend mitdrehender Flügelräder 9 zum Erzeugen einer zum Austragband 4 hin gerichteten Oberflächenströmung in der verunreinigten Emulsion "E mit Ö".

Bei einer solchen Vorrichtung ist nun zur Lösung der mit der Erfindung gestellten Aufgabe als wesentlichstes Merkmal zunächst einmal vorgesehen, daß jedes der Flügelräder 9 von einem zum Band 4 hin offenen, zylindrisch schalenförmigem Gehäuse 16, 16a umgeben ist, und die Gehäusestirnseiten 16 je eine langlochartige, teilweise in die verunreinigte Emulsion E, Ö hineinragende Durchströmöffnung 17 aufweisen, wobei es in spezieller baulicher Ausgestaltung von Vorteil ist, wenn die langlochartigen Durchströmöffnungen 17 konzentrisch und mit Abstand A zum Gehäuserand 16a sowie zur Bandvorderseite angeordnet sind und sich etwa über einen Bereich von 120° in der Gehäusestirnfläche 16 erstrecken und dabei etwa zur Hälfte in die verunreinigte Emulsion "E mit Ö" eintauchen und mit dem restlichen Teil oberhalb letzterer liegen; speziell hierdurch ist eine gerichtete Strömung des auf der Emulsion "E" aufschwimmenden Lecköls "Ö" durch die Langlöcher 17 zum Austragband hin und somit eine hohe Abscheideleistung gewährleistet.

Wichtig für einen hohen Abscheidegrad ist zudem noch, daß die Abstreifer 19 rinnenartig ausgebildet sind, in einem Winkel von etwa 120° mit ihren jeweils einander zugekehrten oberen Längskanten 19a innen wie außen am umlaufenden Lecköl-Austragband 4 anliegen, nach einer Seite hin geneigt zur Bandlängsachse L in entsprechenden Halterungen 22 mit einstellbaren Federdruckstücken 20 gelagert und mit jeweils einer ihrer Befestigungsachsen 19b aus der anderen Halterung 22 ausklappbar sind; dies ermöglicht eine leichte Reinigung, falls sich Späne oder sonstige Verunreinigungen an der Abstreifervorrichtung verklemmt haben und das Austragband blockieren. Weiterhin sinnvoll in diesem Zusammenhang ist noch, daß die obere Bandumlenkrolle 6 angetrieben ist, eine grobrillige bzw. anders griffige Oberfläche aufweist und die sich in der Emulsion E drehende Rolle 8 zum Zwecke der Selbstreinigung des umlaufenden Bandes 4 von Spänen o.ä. Feststoffen eine schraubenlinienförmig genutete Oberfläche besitzt. Vorgesehen sein kann hierbei auch noch eine Abdeckhaube 18 für die Rolle 8.

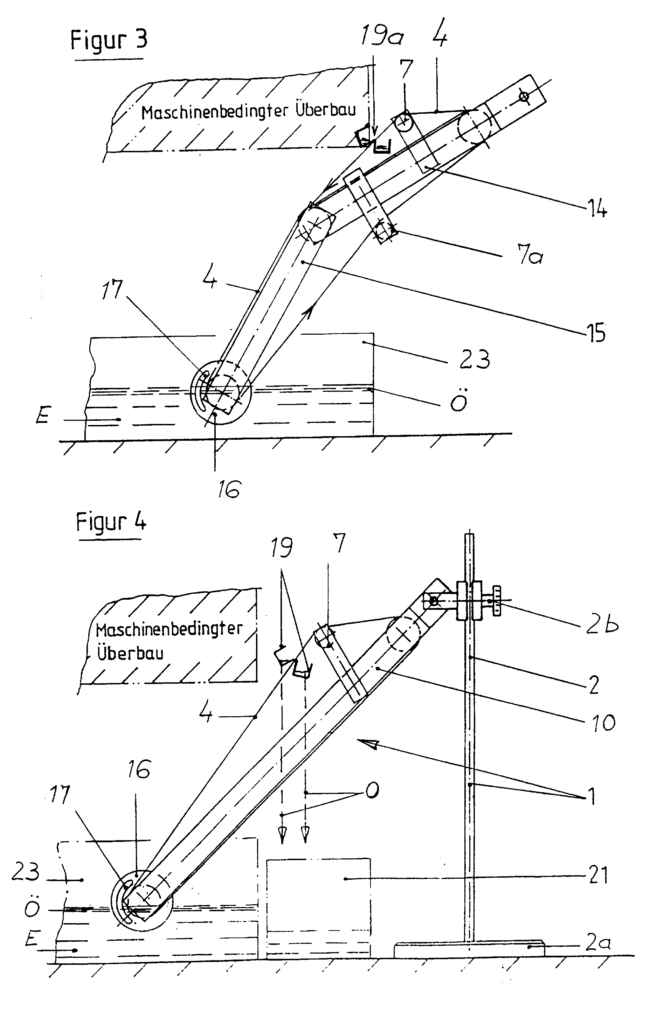

Zur Anpassung an alle in der Praxis möglichen Einsatzbedingungen kann es bei der zuvor beschriebenen Vorrichtung zudem noch wie in Fig. 3 angedeutet möglich sein, daß die Seitenteile 10 des rahmenartigen Gestells 3 zur Erzielung eines abgewinkelten Verlaufs des Austragbandes 4 aus mehreren, gegeneinander verstellbaren Einzelteilen 14, 15 bestehen.
In einem solchen Fall müßte dann die betreffende Spannrolle 7a im Bereich des rücklaufenden Austragbandbereichs angeordnet sein.

### Bezugsziffernverzeichnis

- 1: Gesamtvorrichtung
- 2: Ständer
- 2a: Fußplatte
- 2b: Klemmschraube
- 3: Gestell
- 4: Austragband
- 5: Antriebseinheit, Getriebemotor
- 6: Umlenkrolle
- 7: Spannrolle
- 7a: Spannrolle (Fig. 3)
- 8: Umlenkrolle
- 9: Flügelrad
- 10: Seitenteil
- 11: Verbindungsstange
- 12: Verbindungsstange
- 13: Achse der angetriebenen Rolle
- 14: verstellbares Seitenteil (Fig.3)
- 15: verstellbares Seitenteil (Fig. 3)
- 16: Gehäusestirnseite
- 16a: Gehäuserand
- 17: langlochartige Durchströmöffnung
- 18: Abdeckung für Rolle 8
- 19: Abstreiferrinne
- 19a: obere Längskante
- 19b: Befestigungsachse
- 19c: freies Ende
- 20: Druckfeder, Druckstück
- 21: Leckölbehälter
- 22: Halterung für Pos. 19
- 23: Emulsionsbehälter
- A: Abstand
- E: Emulsion
- L: Bandlängsachse
- Ö: Lecköl

## Patentansprüche

1. **Vorrichtung** (1) zum Abscheiden von Lecköl (Ö) aus Schmier- oder Kühlemulsionen (E), beispielsweise bei der spanabhebenden Metallbearbeitung, mittels eines in einem rahmenartigen Gestell (3, 10 bzw. 14, 15) über Rollen (6, 7, 8), von denen zumindest eine (6) durch einen Motor (5) angetrieben ist, umlaufenden, teilweise in die verunreinigte Emulsion (E, Ö) eintauchenden Bandes (4) sowie letzterem zugeordnete, mechanische Abstreifer (19, 19a) für das Sammeln und Ableiten des am Austragband (4) beidseitig anhaftenden Lecköls (Ö) zu einem Auffangbehälter (21), sowie vorzugsweise beidseits der in die Oberfläche der verunreinigten Emulsion (E, Ö) teilweise eintauchenden, unteren Bandumlenkrolle (8) auf deren Wele (12) angeordneter und mit dieser gleichlaufend mitdrehender Flügelräder (9) zum Erzeugen einer zum Austragband (4) hin gerichteten Oberflächenströmung in der verunreinigten Emulsion (E, Ö),
**dadurch gekennzeichnet,**
daß jedes der Flügelräder (9) von einem zum Band (4) hin offenen, zylindrisch schalenförmigem Gehäuse (16, 16a) umgeben ist und die Gehäusestirnseiten (16) je eine langlochartige, teilweise in die verunreinigte Emulsion (E, Ö) hineinragende Durchströmöffnung (17) aufweisen.

2. Vorrichtung nach Anspruch 1,
**dadurch gekennzeichnet,**
daß die langlochartigen Durchströmöffnungen (17) konzentrisch und mit Abstand (A) zum Gehäuserand (16a) sowie zur Bandvorderseite angeordnet sind und sich etwa über einen Bereich von 120° in der Gehäusestirnfläche (16) erstrecken.

3. Vorrichtung nach den Ansprüchen 1 und 2,
**dadurch gekennzeichnet,**
daß die Abstreifer (19) rinnenartig ausgebildet sind, in einem Winkel von etwa 120° mit ihren jeweils einander zugekehrten, oberen Längskanten (19a) innen wie außen am umlaufenden Lecköl-Austragband (4) anliegen, nach einer Seite hin geneigt zur Bandlängsachse (L) in entsprechenden Halterungen (22) mit einstellbaren Federdruckstücken (20) gelagert und um jeweils eine ihrer Befestigungsachsen (19b) aus der anderen Halterung (22) ausklappbar sind.

4. Vorrichtung nach einem oder mehreren der vorhergehenden Ansprüche,
**dadurch gekennzeichnet,**
daß die obere Bandumlenkrolle (6) angetrieben ist, eine grobrillige bzw. anders griffige Oberfläche aufweist und die sich in der Emulsion (E) drehende Rolle (8) zum Zwecke der Selbstreinigung des umlaufenden Bandes (4) von Spänen o.ä. Feststoffen eine schraubenlinienförmig genutete Oberfläche besitzt.

5. Vorrichtung nach einem oder mehreren der vorhergehenden Ansprüche,
**dadurch gekennzeichnet,**
daß die Seitenteile (3) zur Erzielung eines abgewinkelten Verlaufs des Austragbandes (4 in Fig. 3) aus mehreren, gegeneinander verstellbaren Einzelteilen (14, 15) bestehen.

## Claims

1. Device (1) for the separation of leakage oil (Ö) from lubricating or cooling emulsions (E), for example in machining metal processing, by means of a belt (4) which dips partially into the contaminated emulsion (E, Ö) and circulates in a framelike support (3, 10 or 14, 15) by way of rollers (6, 7, 8) of which at least one (6) is driven by a motor (5), as well as mechanical strippers (19, 19a), which are associated with the belt, for the collecting and conducting away to a catch tank (21) of the leakage oil (Ö) adhering at both sides to the discharge belt (4), as well as impellers (9), which are preferably arranged at both sides and on the shaft (12) of and synchronously corotating with the lower belt deflecting roller (8) dipping partially into the surface of the contaminated emulsion (E, Ö), for the generation of a surface flow, which is directed towards the discharge belt (4), in the contaminated emulsion (E, Ö), characterised thereby that each of the impellers (9) is surrounded by a cylindrical shell-shaped housing (16, 16a) open towards the belt (4) and the housing end faces (16) each have a respective slotlike throughflow opening (17) projecting partially into the contaminated emulsion (E, Ö).

2. Device according to claim 1, characterised thereby that the slotlike throughflow openings (17) are arranged concentrically with and at a spacing (A) from the housing edge (16a) as well as from the belt front side and extend over a region of 120° in the housing end surface (16).

3. Device according to claim 1 and 2, characterised thereby that the strippers are constructed to be channel-like, bear at an angle of about 120° by their mutually facing upper longitudinal edges (19a) inwardly and outwardly against the circulating leakage oil discharge belt (4), are mounted inclined at one side relative to the belt longitudinal axis (L) in corresponding holders (22) with settable spring pressure elements (20), and can be tilted out each time about one of their fastening axes (19b) out of the other holder (22).

4. Device according to one or more of the preceding claims, characterised thereby that the upper belt deflecting roller (6) is driven, has a coarsely grooved or otherwise grip-promoting surface and the roller (8) rotating in the emulsion (E) has a helically grooved surface for the purpose of automatically cleaning the circulating belt (4) of swarf or similar solids.

5. Device according to one or more of the preceding claims, characterised thereby that the side parts (3) consist of several individual parts (14, 15), which are adjustable relative to one another, for attainment of an angled course of the discharge belt (4 in Fig. 3).

## Revendications

1. Dispositif (1) pour séparer de l'huile de fuite (Ö) d'émulsions lubrifiantes ou refroidissantes (E), par exemple lors de l'usinage de métaux par enlèvement de copeaux, au moyen d'une bande (4) qui circule dans un bâti semblable à un cadre (3, 10 ou 14, 15) en passant sur des rouleaux (6, 7, 8) dont au moins un (6) est entraîné par un moteur (5) et qui plonge en partie dans l'émulsion souillée (E, Ö), ainsi que de racles mécaniques (19, 19a) associées à la bande pour collecter l'huile de fuite (Ö) qui adhère de part et d'autre de la bande d'évacuation (4) et l'évacuer vers un collecteur (21), et de roues à ailettes (9) disposées de préférence de part et d'autre du rouleau de renvoi inférieur (8) de la bande plongeant partiellement dans la surface de l'émulsion souillée (E, Ö), sur l'arbre (12) de ce rouleau, et tournant dans le même sens que cet arbre, afin de produire dans l'émulsion souillée (E, Ö) un flux de surface dirigé vers la bande d'évacuation (4), caractérisé en ce que chacune des roues à ailettes (9) est entourée par un carter (16, 16a) en forme de coupe cylindrique et ouvert en direction de la bande (4), et en ce que les faces frontales du carter (16) présentent chacune une ouverture de passage (17) semblable à un trou oblong, qui plonge partiellement dans l'émulsion souillée (E, Ö).

2. Dispositif selon la revendication 1, caractérisé en ce que les ouvertures de passage semblables à des trous oblongs (17) sont disposées de façon concentrique et à une distance (A) par rapport au bord du carter (16a) et par rapport à la face avant de la bande et s'étendent approximativement sur une zone de 120° dans la face frontale du carter (16).

3. Dispositif selon les revendications 1 et 2, caractérisé en ce que les racles (19) sont réalisées à la manière de goulottes, sont appliquées avec un angle d'environ 120° par leurs arêtes longitudinales supérieures se faisant face (19a), à l'intérieur comme à l'extérieur, contre la bande d'évacuation sans fin (4) pour l'huile de fuite, sont logées dans des dispositifs de fixation correspondants (22) munis d'éléments sous pression de ressort réglables (20) en étant inclinées vers un côté par rapport à l'axe longitudinal de la bande (L) et peuvent basculer autour de l'un de leurs axes de fixation (19b) hors de l'autre dispositif de fixation (22).

4. Dispositif selon l'une ou plusieurs des revendications précédentes, caractérisé en ce que le rouleau de renvoi supérieur (6) de la bande est entraîné, présente une surface à rainures grossières ou munie d'autres éléments d'adhérence, et en ce que le rouleau (8) qui tourne dans l'émulsion (E) comporte une surface rainurée en forme d'hélice pour permettre l'autonettoyage de la bande sans fin (4), afin de la débarrasser des copeaux ou des corps solides analogues.

5. Dispositif selon l'une ou plusieurs des revendications précédentes, caractérisé en ce que les parties latérales (3) sont composées de plusieurs éléments (14, 15) réglables les uns par rapport aux autres pour obtenir le tracé incliné de la bande d'évacuation (4 sur la fig. 3).
